# EUROPEAN PATENT SPECIFICATION

(11) **EP 3 900 601 B1**
(45) Date of publication and mention of the grant of the patent: **24.05.2023**
(21) Application number: 18943669.4
(22) Date of filing: 17.12.2018
(51) Int. Cl.: A47L 9/16, A47L 9/18

(54) **SEPARATOR AND CLEANER WITH SEPARATOR**
ABSCHEIDER UND REINIGER MIT ABSCHEIDER
SÉPARATEUR ET NETTOYEUR AVEC SÉPARATEUR

(43) Date of publication of application: 27.10.2021
(73) Proprietor: Suzhou Gamana Electric Appliance Co., Ltd., Suzhou, Jiangsu 215000 (CN)
(72) Inventor: PAN, Jiawen, Suzhou, Jiangsu 215000 (CN); ZHANG, Jingjing, Suzhou, Jiangsu 215000 (CN)
(74) Representative: Meyer, Thorsten
(86) International application number: PCT/CN2018/121610
(87) International publication number: WO 2020/124332

(56) References cited:
- EP-A1- 0 890 335
- CN-Y- 201 271 205
- US-A- 5 902 386

## Description

### TECHNICAL FIELD

The present invention relates to the technical field of cleaners, and in particular, to a separator and a cleaner with the separator.

### BACKGROUND

A separator is a kind of device used for air-solid system separation or liquid-solid system separation. The working principle of the separator is that solid particles or liquid drops with larger inertial centrifugal force are scattered over an outer wall surface through rotational motion caused by a tangential introduction of an airflow. The separator is used in a cleaner to retain possible residual pollutants/dust in inhaled air before the air is discharged from the cleaner. Usually, the separator is non-rotatably mounted on a motor shaft of a motor of the cleaner and rotates at a high speed.

An existing separator generally includes a top plate and a bottom plate. Both the top plate and the bottom plate are circular in shape, and the diameter of the top plate is greater than that of the bottom plate, as disclosed in European Patent EP0890335A1. Such a separator has a small air inhaling force and makes a small change to a speed of an inhaled solid particle or liquid drop. When the initial speed of the separator is low, it is easy to inhale a solid particle or a liquid drop, resulting in a poor garbage separation effect. Moreover, the inhaled solid particle or liquid drop will adhere to a filter element, affecting the service life of the filter element.

### SUMMARY

An objective of the present invention is to provide a separator and a cleaner with the separator, to resolve the above technical problems in the prior art.

In order to achieve the above objective, the present invention adopts the following technical solutions:

According to an aspect, the present invention provides a separator, including a top plate, a bottom plate, and a plurality of grid bars, where both the top plate and the bottom plate are circular in shape, and the diameter of the top plate is less than that of the bottom plate;
the separator has a motor connection portion, and a center of the motor connection portion coincides with a rotation center of the separator; and
the plurality of grid bars are circumferentially spaced between the top plate and the bottom plate.

Preferably, a preset included angle is formed between the grid bar and the central axis of the separator, and the preset included angle is greater than 0 degrees and less than 90 degrees.

Preferably, a first through hole is disposed between the circumferentially-spaced grid bars.

Preferably, the top plate is provided with a plurality of second through holes, and the plurality of second through holes are circumferentially spaced around the motor connection portion.

According to another aspect, the present invention provides a cleaner with the above separator.

The separator and the cleaner with the separator that are provided in the present invention have the following beneficial effects:

The separator and the cleaner with the separator that are provided in the present invention have a large air inhaling force and make a drastic change to a speed of an inhaled solid particle or liquid drop. When the initial speed of the separator is low, it is not easy to inhale a solid particle or a liquid drop. This improves a garbage separation effect without affecting the service life of a filter element.

Additional aspects and advantages of the present invention are to be partially provided in the following description, and partially become evident in the following description, or understood through the practice of the present invention.

### BRIEF DESCRIPTION OF THE DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic three-dimensional (3D) structural diagram of a separator at one angle according to an embodiment of the present invention;
FIG. 2 is a schematic 3D structural diagram of a separator at another angle according to an embodiment of the present invention;
FIG. 3 is a front view of a separator according to an embodiment of the present invention; and
FIG. 4 is a sectional view in an A-A direction.

Reference numerals in the accompanying drawings: 1: top plate; 2: bottom plate; 3: grid bar; 4: motor connection portion; 5: first through hole; and 6: second through hole.

### DETAILED DESCRIPTION

To make the objectives, technical solutions, and advantages of the present invention clearer and more comprehensible, the present invention is described in further detail below with reference to specific embodiments and accompanying drawings. It should be understood that the description is exemplary and is not intended to limit the scope of the present invention.

In the description of the present invention, it should be understood that orientation or position relationships indicated by terms "upper", "lower", "top", "bottom", and the like are orientation or position relationships as shown in the drawings, and these terms are just used to facilitate description of the present invention and simplify the description, but not to indicate or imply that the mentioned apparatus or elements must have a specific orientation and must be constructed and operated in a specific orientation, and thus, these terms cannot be understood as a limitation to the present invention.

### Embodiment

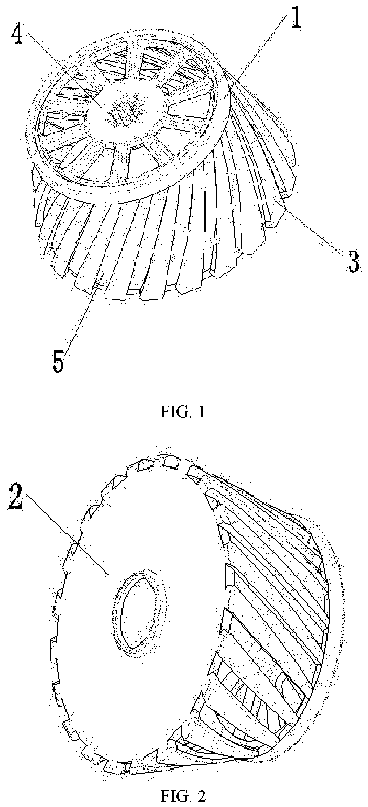

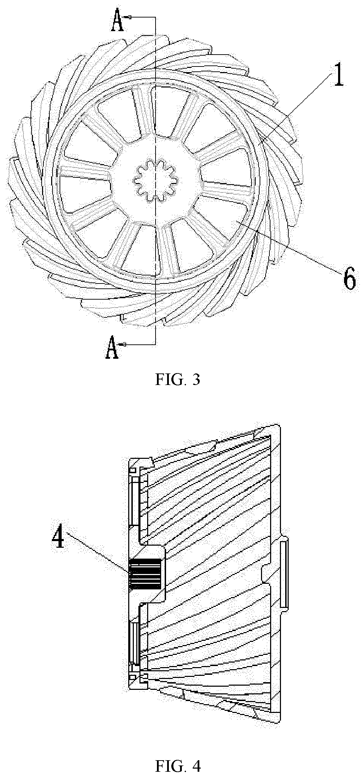

As shown in FIG. 1 to FIG. 4, this embodiment of the present invention provides a separator. The separator includes a top plate 1, a bottom plate 2, and a plurality of grid bars 3. Both the top plate 1 and the bottom plate 2 are circular in shape. The plurality of grid bars 3 are circumferentially spaced between the top plate 1 and the bottom plate 2. In a preferred implementation, the top plate 1, the bottom plate 2, and the grid bars 3 are made of plastic integrally.

In a preferred implementation, the separator has a motor connection portion 4, a center of the motor connection portion 4 coincides with the rotation center of the separator, and the separator is connected to an output shaft of a motor of a cleaner by using the motor connection portion 4.

In a preferred implementation, the grid bars 3 are the same, and a preset included angle is formed between the grid bar and the central axis of the separator. The preset included angle may be greater than 0 degrees and less than 90 degrees. A first through hole 5 is disposed between the circumferentially-spaced grid bars 3 to let air in.

In a preferred implementation, the top plate 1 is provided with a plurality of second through holes 6, and the plurality of second through holes 6 are circumferentially spaced around the motor connection portion 4 to let air out.

In a preferred implementation, the diameter of the top plate 1 is less than that of the bottom plate 2. In such a design manner, the separator has large air inhaling force, and makes a drastic change to a speed of an inhaled solid particle or liquid drop. When the initial speed of the separator is low, it is not easy to inhale a solid particle or a liquid drop. This improves a garbage separation effect without affecting the service life of a filter element.

In specific use, the separator scatters, over an outer wall surface through rotational motion caused by tangential introduction of an airflow, solid particles or liquid drops contained in air that is inhaled into a dust cup through an air inlet of the cleaner. In this way, the solid particles or liquid drops contained in the air are retained in the dust cup, and clean air flows into the separator through the first through hole 5, and is discharged from an air outlet of the cleaner through the second through hole 6.

The separator is used in a cleaner. Therefore, an embodiment of the present invention further provides a cleaner including the separator. A deducing process of a beneficial effect of the cleaner is similar to that of the beneficial effect of the separator. Details are not described herein again.

## Claims

1. A separator, comprising a top plate (1), a bottom plate (2), and a plurality of grid bars (3), wherein both the top plate (1) and the bottom plate (2) are circular in shape, and a diameter of the top plate (1) is less than that of the bottom plate (2);
the separator has a motor connection portion (4), and a center of the motor connection portion (4) coincides with a rotation center of the separator;
the plurality of grid bars (3) are circumferentially spaced between the top plate (1) and the bottom plate (2);
and
the top plate (1) is provided with a plurality of second through holes (6), and the plurality of second through holes (6) are circumferentially spaced around the motor connection portion (4).

2. The separator according to claim 1, wherein a preset included angle is formed between the grid bar (3) and a central axis of the separator, and the preset included angle is greater than 0 degrees and less than 90 degrees.

3. The separator according to claim 1, wherein a first through hole (5) is disposed between the circumferentially-spaced grid bars (3).

4. A cleaner with a separator, wherein the separator is of any one of claims 1 to 3.

## Patentansprüche

1. Abscheider, umfassend eine obere Platte (1), eine Bodenplatte (2) und eine Vielzahl von Gitterstangen (3), wobei sowohl die obere Platte (1) als auch die Bodenplatte (2) in der Form kreisförmig sind und ein Durchmesser der oberen Platte (1) kleiner als der der Bodenplatte (2) ist;
wobei der Abscheider einen Motorverbindungsabschnitt (4) aufweist und ein Zentrum des Motorverbindungsabschnitts (4) mit einem Rotationszentrum des Abscheiders übereinstimmt;
die Vielzahl von Gitterstangen (3) in Umfangsrichtung zwischen der oberen Platte (1) und der Bodenplatte (2) beabstandet ist;
und
die obere Platte (1) mit einer Vielzahl von zweiten Durchbohrungen (6) versehen ist und die Vielzahl von zweiten Durchbohrungen (6) in Umfangsrichtung um den Motorverbindungsabschnitt (4) beabstandet ist.

2. Abscheider nach Anspruch 1, wobei ein voreingestellter Öffnungswinkel zwischen der Gitterstange (3) und einer Mittelachse des Abscheiders gebildet ist und der voreingestellte Öffnungswinkel größer als 0 Grad und kleiner als 90 Grad ist.

3. Abscheider nach Anspruch 1, wobei eine erste Durchbohrung (5) zwischen den in Umfangsrichtung beabstandeten Gitterstangen (3) angeordnet ist.

4. Reiniger mit einem Abscheider, wobei der Abscheider einem der Ansprüche 1 bis 3 entspricht.

## Revendications

1. Séparateur, comprenant une plaque supérieure (1), une plaque inférieure (2) et une pluralité de barres de grille (3), dans lequel la plaque supérieure (1) et la plaque inférieure (2) sont toutes deux de forme circulaire, et un diamètre de la plaque supérieure (1) est inférieur à celui de la plaque inférieure (2) ;
le séparateur a une portion de connexion au moteur (4) et un centre de la portion de connexion au moteur (4) coïncide avec un centre de rotation du séparateur ;
la pluralité de barres de grille (3) sont espacées de manière circonférentielle entre la plaque supérieure (1) et la plaque inférieure (2) ;
et
la plaque supérieure (1) est pourvue d'une pluralité de seconds orifices traversants (6), et la pluralité de seconds orifices traversants (6) sont espacés de manière circonférentielle autour de la portion de connexion au moteur (4).

2. Séparateur selon la revendication 1, dans lequel un angle inclus prédéfini est formé entre la barre de grille (3) et un axe central du séparateur, et l'angle inclus prédéfini est supérieur à 0 degré et inférieur à 90 degrés.

3. Séparateur selon la revendication 1, dans lequel un premier orifice traversant (5) est disposé entre les barres de grille espacées de manière circonférentielle (3).

4. Dispositif de nettoyage avec un séparateur, dans lequel le séparateur est selon l'une quelconque des revendications 1 à 3.
